# EUROPÄISCHE PATENTSCHRIFT

(11) **EP 3 379 990 B1**
(45) Veröffentlichungstag und Bekanntmachung des Hinweises auf die Patenterteilung: **06.05.2020**
(21) Anmeldenummer: 16793915.6
(22) Anmeldetag: 10.11.2016
(51) Int. Cl.: A47L 9/28

(54) **BODENREINIGUNGSSYSTEM UND VERFAHREN ZUM REINIGEN EINER BODENFLÄCHE**
FLOOR CLEANING SYSTEM AND METHOD FOR CLEANING A FLOOR SURFACE
SYSTEME DE NETTOYAGE DE SOL ET PROCEDE DE NETTOYAGE D'UNE SURFACE

(30) Priorität: 23.11.2015 DE 102015120221
(43) Veröffentlichungstag der Anmeldung: 03.10.2018
(73) Patentinhaber: Alfred Kärcher SE & Co. KG, 71364 Winnenden (DE)
(72) Erfinder: ROSSKOPF, Christian, 86700 Otting (DE); DÜNNE, Markus, 48691 Vreden (DE); KOHLER, Norman, 72766 Reutlingen (DE); WENZEL, Karl Engelbert, 73663 Berglen (DE)
(74) Vertreter: Hoeger, Stellrecht & Partner Patentanwälte mbB
(86) Internationale Anmeldenummer: PCT/EP2016/077286
(87) Internationale Veröffentlichungsnummer: WO 2017/089140

(56) Entgegenhaltungen:
- EP-A2- 2 725 443
- WO-A1-2015/060672
- US-A1- 2015 032 260

## Beschreibung

Die Erfindung betrifft ein Bodenreinigungssystem, umfassend ein selbstfahrendes und selbstlenkendes Bodenreinigungsgerät zum Reinigen einer Bodenfläche, das eine Steuereinheit, ein ansteuerbares Fahrwerk, mindestens ein Reinigungsaggregat, ein Lokalisierungsglied und ein Kommunikationsglied aufweist, sowie umfassend ein tragbares Zusatzgerät für einen Benutzer, das eine Bedieneinheit, eine Steuereinheit und ein Kommunikationsglied aufweist.

Außerdem betrifft die Erfindung ein Verfahren zum Reinigen einer Bodenfläche.

Bei einem Bodenreinigungssystem der eingangs genannten Art kann die Bodenfläche vom Bodenreinigungsgerät autonom gereinigt werden. Mittels des Fahrwerks kann das Bodenreinigungsgerät über die Bodenfläche verfahren, und die Bodenfläche kann mit dem mindestens einen Reinigungsaggregat abgereinigt werden. Beispiele für derartige Bodenreinigungsgeräte sind Saugroboter oder Kehrsaugroboter. Auch autonom verfahrende Schrubbmaschinen oder Kehrmaschinen sind denkbar.

Bekannt ist es, dass zum Übertragen einer Bedienanweisung an das Bodenreinigungsgerät ein tragbares Zusatzgerät für einen Benutzer zum Einsatz kommen kann. Beispielsweise offenbart die WO 2009/132317 die Verwendung eines Handheld-Computers oder Mobiltelefons, um Informationen auf das Bodenreinigungsgerät zu übertragen. Zu den Informationen zählt zum Beispiel die Pfadplanung für einen vom Bodenreinigungsgerät abzuarbeitenden Reinigungspfad .

Die EP 2 387 931 A2 beschreibt ein Verfahren zum Reinigen einer Bodenfläche, bei der ein Benutzer von einer Fernwarte Abbildungen der Bodenfläche begutachtet, die vom Bodenreinigungsgerät erstellt und übermittelt worden sind. Der Benutzer kann anhand der Abbildungen entscheiden, ob die Bodenfläche an einer von der Abbildung erfassten Position zu reinigen ist. Bejahendenfalls wird eine Anweisung des Benutzers an das Bodenreinigungsgerät übertragen, die Bodenfläche anhand eines vorgebbaren Reinigungsprogramms zu reinigen.

In der US 2015/0032260 A1 ist ein Reinigungsroboter beschrieben, der eine Bilderfassungseinheit aufweist, mit der ein vom Reinigungsroboter gesehenes Bild aufgenommen werden kann. Ferner ist eine Spracheingabeeinheit vorgesehen, über die ein Benutzer gesprochene Bedienanweisungen eingeben kann, sowie eine Steuereinheit, mit der eine über eine Bewegung des Benutzers durch die Bilderfassungseinheit erkannte Bedienanweisung erhalten werden kann. Hiervon abhängig kann ein beschränkter Bereich bestimmt werden, in den der Roboter nicht einfahren darf, oder ein hervorgehobener Reinigungsbereich, der vom Roboter intensiv zu reinigen ist. Der Benutzer kann ein externes Zusatzgerät benutzen, um auf dessen Display ein Bild der Bilderfassungseinheit anzuzeigen. Über das Zusatzgerät kann der Benutzer an dem Bild zu reinigende Bereiche und Bereiche mit Beschränkung definieren.

Die EP 2 725 443 A2 beschreibt ein Roboterreinigungssystem, bei dem ein Reinigungsroboter und ein externes Zusatzgerät zum Einsatz kommen. Mittels einer Kamera des Reinigungsroboters kann ein Bild der Umgebung erstellt werden. Dieser tatsächliche Bereich ist mit einem virtuellen Bereich über das Zusatzgerät verknüpft. Der Benutzer hat die Möglichkeit, Anweisungen für den Reinigungsroboter am Zusatzgerät bereitzustellen, wobei der virtuelle Bereich mit dem tatsächlichen Bereich verknüpft wird und die Anweisungen vom Roboter ausgeführt werden. Der Roboter kann an einen Benutzerstandort gerufen werden.

Aufgabe der vorliegenden Erfindung ist es, ein Bodenreinigungssystem der eingangs genannten Art und ein Verfahren zum Reinigen der Bodenfläche bereitzustellen, mit dem eine gezielte und bedarfsgerechte Reinigung der Bodenfläche durchgeführt werden kann.

Diese Aufgabe wird durch ein erfindungsgemäßes Bodenreinigungssystem mit den Merkmalen von Anspruch 1 gelöst.

Bei dem erfindungsgemäßen Bodenreinigungssystem ist die Möglichkeit gegeben, dass ein Benutzer gezielt einen Reinigungsauftrag an das Bodenreinigungsgerät übermittelt und dadurch eine bedarfsgerechte Reinigung der Bodenfläche auslösen kann. Die Besonderheit besteht darin, dass der Reinigungsauftrag sich auf den Benutzerstandort auf der Bodenfläche bezieht. Der Benutzerstandort ist der Einsatzort, an den sich das Bodenreinigungsgerät bewegen soll, um dort die Bodenfläche zu reinigen. Der Benutzerstandort kann daher insbesondere als Reinigungsauftragserstellungsort oder als Reinigungsauftragsursprungsort bezeichnet werden. Dieser bleibt selbst dann unverändert, wenn sich der Benutzer noch vor oder erst nach dem Absenden des Reinigungsauftrages an einen anderen Standort auf der Bodenfläche bewegt haben sollte. Dementsprechend ist als "Reinigen der Bodenfläche gemäß dem Reinigungsauftrag" vorliegend insbesondere zu verstehen, dass das Bodenreinigungsgerät zum Benutzerstandort verfährt und die Bodenfläche an diesem reinigt. Es versteht sich, dass der Benutzerstandort vom Bodenreinigungssystem vorzugsweise nicht als punktförmig im geometrischen Sinne aufzufassen ist, sondern als mit einer gewissen räumlichen Ausdehnung behaftet angesehen wird. Die räumliche Ausdehnung kann zum Beispiel wenige Quadratmeter betragen oder innerhalb eines Radius von wenigen Metern (beispielsweise ca. 1 m bis 3 m) um die exakte Position des Benutzers liegen.

Die Erfindung eignet sich besonders zum Einsatz in Gebäuden wie beispielsweise Bahnhöfen, Flughäfen, Supermärkten oder Einkaufszentren, die Bodenflächen beträchtlicher Größe aufweisen können. In erster Linie ist der Einsatz des Bodenreinigungssystems nicht auf den Zweck gerichtet, die Bodenfläche eines derartigen Gebäudes komplett und flächendeckend zu reinigen. Vielmehr liegt der Vorteil der Erfindung darin, dass isolierte Verschmutzungen der Bodenfläche bei Bedarf gezielt gereinigt werden können. Beispielsweise kann eine Aufsichtsperson oder ein Mitarbeiter in einem derartigen Gebäude, sofern ihr/ihm eine Verschmutzung auffällt, über das tragbare Zusatzgerät einen Reinigungsauftrag an das Bodenreinigungsgerät übermitteln. Dies ist zum einen dann möglich, wenn die Aufsichtsperson die Bodenfläche auf mögliche Verschmutzungen inspiziert mit dem Ziel, Restverschmutzungen entfernen zu lassen. Zum anderen besteht der Vorteil der Erfindung gerade auch darin, dass Aufsichtspersonen oder Mitarbeiter, die ihrer gewohnten Arbeit nachgehen und eine Verschmutzung feststellen, die räumlich lokalisierte Reinigung der Bodenfläche am Benutzerstandort beiläufig in Auftrag geben. Dies kann sogar im wörtlichen Sinne als "im Vorübergehen" aufgefasst werden. Ein typischer Anwendungsfall hierfür ist zum Beispiel eine Verschmutzung aufgrund einer herabgefallenen und zerborstenen Lebensmittelverpackung in einem Supermarkt oder eine tierische Ausscheidung in einem Bahnhof.

Die Positionsinformation ist vom Zusatzgerät zusammen mit dem oder als Bestandteil des Reinigungsauftrag(es) übermittelbar. Der Reinigungsauftrag enthält damit die vollständige Information für das Bodenreinigungsgerät, sich zum Benutzerstandort zu begeben und die Bodenfläche dort zu reinigen. Eine gesonderte Übersendung einer Positionsinformation kann eingespart werden.

Der Reinigungsauftrag kann vom Zusatzgerät unmittelbar an das Bodenreinigungsgerät übertragen werden oder über eine zwischengeschaltete Reinigungszentrale, unter deren Verwaltung beispielsweise eine Mehrzahl von Bodenreinigungsgeräten steht. Die Zentrale könnte den Reinigungsauftrag an das nächstgelegene Bodenreinigungsgerät weiterleiten.

Die Übertragung des Reinigungsauftrages erfolgt kabellos, zum Beispiel über eine Funk-Kommunikationsverbindung über ein Mobilfunknetz, das Internet etc.

Es kann sogar vorgesehen sein, dass allein eine Positionsinformation vom Zusatzgerät an das Bodenreinigungsgerät übermittelt wird und dass die Positionsinformation allein den Reinigungsauftrag ausbildet und als solcher interpretiert wird.

Der Benutzerstandort kann am Zusatzgerät von einem Benutzer über die Bedieneinheit vorgebbar sein, wodurch der Benutzer die Positionsinformation bereitstellen kann.

Vorteilhafterweise ist die Positionsinformation vom Zusatzgerät ohne weiteres Zutun des Benutzers an das Bodenreinigungsgerät übermittelbar, um einem Benutzer die Handhabung des Bodenreinigungssystems zu erleichtern. Günstig ist es, wenn das Zusatzgerät ein Lokalisierungsglied aufweist, mit dem der Benutzerstandort zum Bereitstellen der Positionsinformation anhand zumindest eines der Folgenden ermittelbar ist:
- die Position des Zusatzgerätes in einem relativen Bezugssystem, das anhand von mindestens einer Positionslandmarke definiert wird;
- die Position des Zusatzgerätes in einem absoluten Bezugssystem.

Das Zusatzgerät kann seine Position anhand des Lokalisierungsgliedes vorteilhafterweise in einem relativen Bezugssystem und/oder in einem absoluten Bezugssystem ermitteln. Zur Definition eines relativen Bezugssystems kommt eine oder mehrere Positionslandmarke(n) zum Einsatz, ein sogenannter "Beacon". Beispielsweise kann an der Bodenfläche oder in definierter räumlicher Beziehung zu dieser eine Mehrzahl von Positionslandmarken positioniert sein, wobei über das Lokalisierungsglied die Position des Zusatzgerätes relativ zu den Positionslandmarken und dadurch in dem von diesen definierten Bezugssystem festgestellt werden kann. Alternativ oder ergänzend kann eine absolute Position ermittelbar sein, zum Beispiel in einem satellitengestützten Bezugssystem wie GPS o.ä.. Die Genauigkeit der Positionsbestimmung (Ortsauflösung) liegt bevorzugt bei weniger als ungefähr 2 m, vorzugsweise bei etwa 1 m oder darunter.

Das Bodenreinigungssystem kann eine Lokalisierungseinheit umfassen, anhand derer die Position des Benutzers ermittelbar ist, wobei die Positionsinformation von der Lokalisierungseinheit an das Bodenreinigungsgerät auf dessen Anfrage hin übermittelbar ist. Ergänzend oder alternativ zur Übertragung der Positionsinformation vom Zusatzgerät ist denkbar, dass das Bodenreinigungsgerät nach Erhalt eines Reinigungsauftrages eine Anfrage bei der Lokalisierungseinheit, beispielsweise der vorstehend genannten Zentrale, bezüglich der Positionsinformation stellt, um den Benutzerstandort zu ermitteln. Die Lokalisierungseinheit kann zum Beispiel das Zusatzgerät in einem relativen Bezugssystem orten und dem Bodenreinigungsgerät eine diesbezügliche Information zukommen lassen.

Günstig ist es, wenn das Zusatzgerät ein Speicherglied aufweist, in dem eine Karte der Bodenfläche gespeichert ist, sowie ein Lokalisierungsglied zum Ermitteln des Benutzerstandortes innerhalb der Karte zum Bereitstellen der Positionsinformation. Beispielsweise ist die Karte räumlich verknüpft mit einer Angabe über das relative Bezugssystem gespeichert, so dass die Positionsinformation sich auf die Angabe des Benutzerstandortes innerhalb der Karte bezieht (beispielsweise im Sinne eines Planquadrates), nachdem eine Position im relativen Bezugssystem ermittelt werden konnte. Denkbar ist auch, dass vom Zusatzgerät in Abbildungen der Bodenfläche charakteristische Merkmale erkannt werden können, die als Landmarken in der Karte hinterlegt sind. Durch Auffinden der Landmarken in der Karte kann der Benutzerstandort innerhalb der Karte ermittelt werden.

Als vorteilhaft erweist es sich, wenn der Standort des Bodenreinigungsgerätes anhand von dessen Lokalisierungsglied im relativen Bezugssystem ermittelbar ist und/oder im absoluten Bezugssystem; und/oder in einer Karte der Bodenfläche, die in einem Speicherglied des Bodenreinigungsgerätes gespeichert ist. In entsprechender Weise wie vorstehend am Beispiel des Zusatzgerätes erläutert kann vorgesehen sein, dass über das Lokalisierungsglied die Position des Bodenreinigungsgerätes anhand mindestens einer Positionslandmarke aufgefunden werden kann. Eine Positionsinformation über den Benutzerstandort kann dadurch unmittelbar mit der Position des Bodenreinigungsgerätes im relativen Bezugssystem verglichen und das Bodenreinigungsgerät zum Benutzerstandort geleitet werden. Entsprechendes gilt für die Positionsinformation im absoluten Bezugssystem und/oder für eine Positionsinformation in einer Karte der Bodenfläche. Eine sich auf die Karte beziehende Positionsinformation kann mit der Position des Bodenreinigungsgerätes in der Karte verglichen werden, so dass das Bodenreinigungsgerät zum Benutzerstandort verfahren werden kann.

Das Lokalisierungsglied des Zusatzgerätes und/oder das Lokalisierungsglied des Bodenreinigungsgerätes sind bevorzugt zum Zusammenwirken mit Funk-Positionslandmarken, insbesondere Bluetooth-Positionslandmarken, und/oder optischen Positionslandmarken ausgebildet.

Vorzugsweise umfasst das Bodenreinigungssystem mindestens eine Positionslandmarke zur Definition eines relativen Bezugssystems. Dabei handelt es sich beispielsweise um eine Funk-Positionslandmarke, insbesondere eine Bluetooth-Positionslandmarke. Günstigerweise ist die mindestens eine Positionslandmarke in definierter räumlicher Beziehung zur Bodenfläche positioniert und räumlich mit einer Karte derselben verknüpft, die im Zusatzgerät und/oder dem Bodenreinigungsgerät gespeichert ist. Dies ist jedoch für die Funktionsweise der vorliegenden Erfindung nicht zwingend erforderlich.

Als vorteilhaft erweist es sich, wenn das Zusatzgerät eine Abbildungseinheit aufweist, mit der eine Abbildung der Bodenfläche erstellbar ist, und wenn zumindest eines der Folgenden durchführbar ist:
- Übertragen der Abbildung an das Bodenreinigungsgerät, wobei anhand von dessen Lokalisierungsglied aufgrund von charakteristischen Merkmalen in der Abbildung der Benutzerstandort ermittelbar ist;
- Ermitteln des Benutzerstandortes aufgrund von charakteristischen Merkmalen in der Abbildung anhand eines Lokalisierungsgliedes des Zusatzgerätes.

Über die Abbildungseinheit, die insbesondere eine digitale Kamera ist oder umfasst, kann der Benutzer eine Abbildung der Bodenfläche erstellen. Vorzugsweise wird der Benutzer dabei zugleich die zu entfernende Verschmutzung mit abbilden. Die Abbildung kann vom Zusatzgerät an das Bodenreinigungsgerät übertragen werden. Charakteristische Merkmale, die in der Abbildung enthalten sind, können vom Lokalisierungsglied des Zusatzgerätes und/oder desjenigen des Bodenreinigungsgerätes aufgefunden werden. Anhand der extrahierten charakteristischen Merkmale ermittelt das Lokalisierungsglied die Positionsinformation, so dass der Benutzerstandort aufgefunden und die Bodenfläche an diesem gereinigt werden kann. Insbesondere ist dadurch die Möglichkeit gegeben, dass die Positionsinformation vom Zusatzgerät als Bestandteil der Abbildung der Bodenfläche an das Bodenreinigungsgerät übermittelt wird und eine weitergehende Lokalisierung des Zusatzgerätes im relativen und/oder absoluten Bezugssystem nicht erfolgt. Dennoch ist es selbstverständlich möglich, dass vom Benutzer mit dem Zusatzgerät eine Abbildung der Bodenfläche erstellt und an das Bodenreinigungsgerät übertragen wird, wobei die Positionsinformation zusätzlich zur Abbildung übermittelt wird, beispielsweise im relativen und/oder absoluten Bezugssystem.

Die Möglichkeit, eine Abbildung vom Zusatzgerät auf das Bodenreinigungsgerät zu übertragen, erlaubt die Umsetzung einer besonders vorteilhaften Ausführungsform des Bodenreinigungssystems. Vorzugsweise fasst das Bodenreinigungsgerät den Empfang einer optischen Abbildung der Bodenfläche, vom Zusatzgerät übermittelt, als Reinigungsauftrag auf, die Bodenfläche an der in der Abbildung dargestellten Position zu reinigen. Es kann bei einer vorteilhaften Ausführungsform dementsprechend vorgesehen sein, dass lediglich eine Abbildung der Bodenfläche an das Bodenreinigungsgerät zu übermitteln ist, die günstigerweise die Verschmutzung mit umfasst. Anhand mindestens eines charakteristischen Merkmals der Abbildung wird die Positionsinformation extrahiert und der Benutzerstandort festgestellt.

Das Bodenreinigungsgerät weist vorzugsweise mindestens eine Sensoreinheit auf, um die Umgebung des Bodenreinigungsgerätes erfassen und untersuchen zu können. Die Sensoreinheit ist oder umfasst zum Beispiel eine optische Sensoreinheit, zum Beispiel die nachfolgende genannte Abbildungseinheit.

Das Bodenreinigungsgerät weist vorzugsweise eine Abbildungseinheit zum Erstellen von Abbildungen der Umgebung auf, wobei vom Bodenreinigungsgerät anhand seines Lokalisierungsgliedes günstigerweise sein Standort innerhalb der Umgebung anhand der Abbildungen ermittelbar ist. Das Bodenreinigungsgerät kann dementsprechend in der Umgebung bevorzugt optisch navigieren. Charakteristische Merkmale der von der Abbildungseinheit, speziell mit einer digitalen Kamera, erstellten Abbildungen sind zum Beispiel mit Landmarken verknüpft, die in einer im Bodenreinigungsgerät gespeicherten Karte hinterlegt sind. Durch Vergleich der charakteristischen Merkmale mit den Landmarken ist es dem Bodenreinigungsgerät möglich, seine Position innerhalb der Karte festzustellen. Die auf Basis optischer Abbildung ermittelte Position des Bodenreinigungsgerätes kann insbesondere mit einer Positionsinformation verknüpft sein, die unter Einsatz des relativen Bezugssystems mit Positionslandmarken gewonnen wird.

Eine Abbildungseinheit des Bodenreinigungsgerätes kann auch einen optischen Scanner umfassen, beispielsweise einen Laserscanner.

Die Abbildung kann ein ein-, zwei- oder dreidimensionales/dimensionaler Bild oder Datensatz sein.

Das Bodenreinigungssystem kann im Zusatzgerät und/oder im Bodenreinigungsgerät vorteilhafterweise mindestens ein Schmutzerkennungsglied aufweisen zum Auffinden einer Verschmutzung in einer Abbildung der Bodenfläche, die von einer Abbildungseinheit des Zusatzgerätes oder des Bodenreinigungsgerätes erstellt wurde, sowie zum Bereitstellen einer diesbezüglichen Schmutzinformation. Dies erlaubt es, dass eine Verschmutzung in der Abbildung der Bodenfläche vom entsprechenden Schmutzerkennungsglied automatisch aufgefunden wird. In Kombination mit der Positionsinformation kann dadurch die räumliche Lage der Verschmutzung noch besser festgestellt werden, so dass die Bodenfläche vom Bodenreinigungsgerät noch gezielter gereinigt werden kann.

Vorzugsweise ist vom Schmutzerkennungsglied die Art der Verschmutzung erkennbar, so dass dem Bodenreinigungsgerät nicht nur der Ort der Reinigung zugeleitet werden kann, sondern auch eine Schmutzinformation, welche Verschmutzung zu entfernen ist.

Vorzugsweise ist die Verschmutzung vom Bodenreinigungsgerät anhand der Schmutzinformation gezielt zum Reinigen anfahrbar. Bei einer vorteilhaften Ausführungsform wird die Positionsinformation mit dem Reinigungsauftrag auf eine der vorstehend erläuterten Weisen übertragen, das Bodenreinigungsgerät verfährt zum Benutzerstandort und erkennt mittels des Schmutzerkennungsgliedes in Abbildungen der Bodenfläche automatisch die Verschmutzung, fährt diese gezielt an und reinigt die Bodenfläche.

Die Abbildungen der Bodenfläche umfassen ferner vorzugsweise eine Information betreffend die Beschaffenheit der Bodenfläche. Anhand dieser Bodenbeschaffenheitsinformation ist es dem Bodenreinigungsgerät beispielsweise möglich festzustellen, ob und gegebenenfalls welche Abschnitte der Bodenfläche nicht befahren und/oder nicht gereinigt werden dürfen. Alternativ oder ergänzend kann abhängig von der Bodenbeschaffenheitsinformation eine Voreinstellung mindestens eines Reinigungsaggregates und/oder mindestens eines Reinigungsmusters oder Reinigungspfades vorgenommen werden.

Von Vorteil ist es, wenn der Reinigungsauftrag eine Schmutzinformation betreffend eine Art der Verschmutzung der Bodenfläche aufweist und/oder eine Reinigungsanweisung, die eine Information betreffend die Vorauswahl und/oder Einstellung mindestens eines Reinigungsaggregates umfasst. Dadurch kann eine noch bedarfsgerechtere Reinigung der Bodenfläche vorgenommen werden.

Es kann vorgesehen sein, dass die Schmutzinformation und/oder die Reinigungsanweisung vom Benutzer an der Bedieneinheit vorgebbar ist. Beispielsweise können an der Bedieneinheit Optionen für die Auswahl einer Art der Verschmutzung und/oder für die Reinigungsanweisung angezeigt und von dem Benutzer ausgewählt werden.

Es ist insbesondere vorteilhafterweise die Möglichkeit gegeben, dass vom Bodenreinigungsgerät abhängig von der Schmutzinformation vor der Reinigung ein Reinigungsmodus einstellbar oder auswählbar ist, beispielsweise mindestens ein Reinigungsaggregat und/oder mindestens ein Reinigungsmuster oder Reinigungspfad .

Von Vorteil ist es, wenn vom Bodenreinigungsgerät nach Abarbeiten des Reinigungsauftrags zumindest eines der Folgenden durchführbar ist:
- Überprüfen der Bodenfläche auf Sauberkeit;
- Übersenden einer Meldung an das Zusatzgerät zur Signalisierung für den Benutzer, dass die Bodenfläche mindestens einmal gereinigt wurde.

Zur Überprüfung der Bodenfläche auf Sauberkeit kann das Bodenreinigungsgerät mindestens eine Sensoreinheit aufweisen. Die Sensoreinheit kann beispielsweise durch die Abbildungseinheit gebildet sein oder diese umfassen. Beispielsweise werden Abbildungen der Bodenfläche vor und nach der Reinigung aufgenommen und vom Bodenreinigungsgerät miteinander verglichen. Alternativ oder ergänzend können zum Vergleich Referenzabbildungen, die eine gesäuberte Bodenfläche zeigen, in einem Speicherglied des Bodenreinigungsgerätes zum Zwecke des Vergleiches hinterlegt sein. Die Sensoreinheit kann beispielsweise auch einen oder mehrere Partikelsensoren umfassen, um Größe und/oder Anzahl von Partikeln in einem Saugstrom zu ermitteln und anhand dieser Information zu entscheiden, ob die Bodenfläche hinreichend sauber ist

Vorteilhafterweise ist im Fall der Feststellung, dass die Bodenfläche nicht hinreichend sauber ist, vom Bodenreinigungsgerät mindestens eine nochmalige Reinigung der Bodenfläche durchführbar.

Günstig ist es, wenn vom Bodenreinigungsgerät eine Meldung an das Zusatzgerät zur Signalisierung für den Benutzer übermittelbar ist, wenn am Benutzerstandort keine Verschmutzung auffindbar ist. Dies könnte zum einen ein Indiz dafür sein, dass die Bodenfläche zwischen Erstellen des Reinigungsauftrages am Zusatzgerät und Erreichen des Benutzerstandortes durch das Bodenreinigungsgerät abgereinigt wurde. Zum anderen könnte dies jedoch ein Hinweis darauf sein, dass eine Lokalisierung des Zusatzgerätes und/oder des Bodenreinigungsgerätes fehlerbehaftet ist und eine entsprechende Neukalibrierung der Lokalisierung von Komponenten des Bodenreinigungssystems erforderlich ist.

Eine Meldung des Bodenreinigungsgerätes kann dem Benutzer zum Beispiel an einer Anzeigeeinheit optisch und/oder an einer Lautsprechereinheit akustisch signalisiert werden.

Die Bedieneinheit des Zusatzgerätes kann zur Entgegennahme einer Anweisung unterschiedlich ausgestaltet sein.

Die Bedieneinheit ist zum Beispiel vorzugsweise berührungssensitiv bzw. haptisch durch Druck- und/oder Gestensteuerung ausgestaltet, wobei die Bedieneinheit insbesondere ein(en) Touchscreen ist oder umfasst. Beispielsweise ist im Zusatzgerät ein Anwendungsprogramm ausführbar gespeichert, das an der Bedieneinheit eine Benutzerschnittstelle darstellt. Das Anwendungsprogramm kann zum Beispiel über den Touchscreen bedient werden.

Die Bedieneinheit kann alternativ oder ergänzend akustisch durch Sprachsteuerung ausgestaltet sein, wobei die Bedieneinheit ein Mikrofon ist oder umfasst. Denkbar ist beispielsweise, dass Reinigungsaufträge dem Zusatzgerät vom Benutzer diktiert werden ("Hier muss mal wieder geputzt werden.", "Bitte die Verschmutzung in der Getränkeabteilung entfernen." ...).

Denkbar ist auch, dass die Bedieneinheit trägheitsbasiert und/oder neigungsbasiert ausgestaltet ist, wobei die Bedieneinheit mindestens einen Trägheitssensor und/oder Neigungssensor umfasst. So kann vorgesehen sein, dass ein Schütteln des Zusatzgerätes, das ähnlich durchgeführt wird wie eine Wisch- oder Kehrbewegung, vom Anwendungsprogramm als Reinigungsauftrag interpretiert wird, die Bodenfläche am Benutzerstandort zu reinigen.

Das im Zusatzgerät hinterlegte Anwendungsprogramm kann insbesondere von der Steuereinheit interpretiert werden. Das Anwendungsprogramm kann als sogenannte "App" ausgestaltet sein, die zum Beispiel von einem Hersteller des Bodenreinigungsgerätes bereitgestellt wird. Zu diesem Zweck kann das Bodenreinigungssystem eine Datenverarbeitungseinheit im Besitz oder unter der Verwaltung des Herstellers des Bodenreinigungsgerätes umfassen, von der das Anwendungsprogramm zur Speicherung und Ausführung auf dem Zusatzgerät durch den Benutzer geladen werden kann.

Es versteht sich, dass das vorstehend erwähnte Lokalisierungsglied, Schmutzerkennungsglied, Speicherglied und/oder Kommunikationsglied des Zusatzgerätes in dessen Steuereinheit integriert oder von dieser umfasst sein kann.

In entsprechender Weise kann vorgesehen sein, dass das Lokalisierungsglied, Speicherglied, Schmutzerkennungsglied und/oder Kommunikationsglied des Bodenreinigungsgerätes in dessen Steuereinheit integriert oder von dieser umfasst sein kann.

Das Zusatzgerät kann zum Beispiel ein Smartphone, ein Tabletcomputer oder eine Smartwatch sein.

Das mindestens eine Reinigungsaggregat ist oder umfasst beispielsweise ein Kehraggregat, ein Schrubbaggregat, ein Wischaggregat oder ein Saugaggregat. Das Bodenreinigungsgerät kann zum Beispiel eine Kehrmaschine, Kehrsaugmaschine, Saugmaschine oder Schrubbmaschine sein.

Wie bereits erwähnt betrifft die vorliegende Erfindung auch ein Verfahren. Die eingangs genannte Aufgabe wird durch ein erfindungsgemäßes Verfahren zum Reinigen einer Bodenfläche mit einem Bodenreinigungssystem der vorstehend genannten Art gelöst, wobei von einem Benutzer über die Bedieneinheit des Zusatzgerätes ein Reinigungsauftrag an das Bodenreinigungsgerät ausgelöst wird, der Reinigungsauftrag an das Bodenreinigungsgerät übermittelt wird, die Bodenfläche am Benutzerstandort zu reinigen, wobei eine Positionsinformation über den Benutzerstandort an das Bodenreinigungsgerät übertragen wird, und wobei das Bodenreinigungsgerät zum Benutzerstandort verfährt und die Bodenfläche mit dem mindestens einen Reinigungsaggregat gemäß dem Reinigungsauftrag reinigt.

Die Vorteile, die im Zusammenhang mit der Erläuterung des erfindungsgemäßen Bodenreinigungssystems erwähnt wurden, können unter Anwendung des erfindungsgemäßen Verfahrens ebenfalls erzielt werden. Diesbezüglich kann auf die voranstehenden Ausführungen verwiesen werden.

Vorteilhafte Ausführungsbeispiele des erfindungsgemäßen Verfahrens ergeben sich durch vorteilhafte Ausführungsformen des erfindungsgemäßen Bodenreinigungssystems. Diesbezüglich kann ebenfalls auf voranstehende Erläuterungen verwiesen werden.

Bei einem vorteilhaften Ausführungsbeispiel des Verfahrens ist vorgesehen, dass der Benutzer eine Abbildung der Bodenfläche am Benutzerstandort erstellt, günstigerweise von der Verschmutzung. Die Abbildung wird vom Zusatzgerät an das Bodenreinigungsgerät übertragen zusammen mit einer Positionsinformation, die auf der Basis eines relativen Bezugssystems vom Lokalisierungsglied des Zusatzgerätes ermittelt wird. Das Bodenreinigungsgerät kann sich im relativen Bezugssystem orientieren und verfährt zum Benutzerstandort. Über eine Abbildung der Bodenfläche kann die Verschmutzung vom Bodenreinigungsgerät automatisch aufgefunden und angezielt angefahren werden, wobei das mindestens eine Reinigungsaggregat an die Art der Verschmutzung voreingestellt wird, die mittels des Schmutzerkennungsgliedes festgestellt werden kann. Nach Reinigung der Bodenfläche wird vom Bodenreinigungsgerät überprüft, ob die Bodenfläche sauber ist und erforderlichenfalls eine Nachreinigung durchgeführt. Eine Meldung über den Abschluss des Reinigungsvorganges wird an das Zusatzgerät übermittelt und dem Benutzer signalisiert.

Die nachfolgende Beschreibung bevorzugter Ausführungsformen der Erfindung dient im Zusammenhang mit der Zeichnung der näheren Erläuterung der Erfindung. Es zeigen:
- Figur 1:: eine schematische Darstellung eines erfindungsgemäßen Bodenreinigungssystems, umfassend ein Bodenreinigungsgerät, ein tragbares Zusatzgerät und Positionslandmarken, wobei mit dem Bodenreinigungssystem ein erfindungsgemäßes Verfahren durchführbar ist;
- Figur 2:: einen Benutzer beim Erstellen einer Abbildung einer eine Verschmutzung aufweisenden Bodenfläche zur Erstellung eines Reinigungsauftrages für das Bodenreinigungsgerät;
- Figur 3:: das Bodenreinigungsgerät, das im Begriff ist, die Bodenfläche zum Entfernen der Verschmutzung zu reinigen;
- Figur 4:: das Bodenreinigungsgerät nach dem Reinigen der Bodenfläche und
- Figur 5:: schematisch den Ablauf eines vorteilhaften Ausführungsbeispiels des Verfahrens.

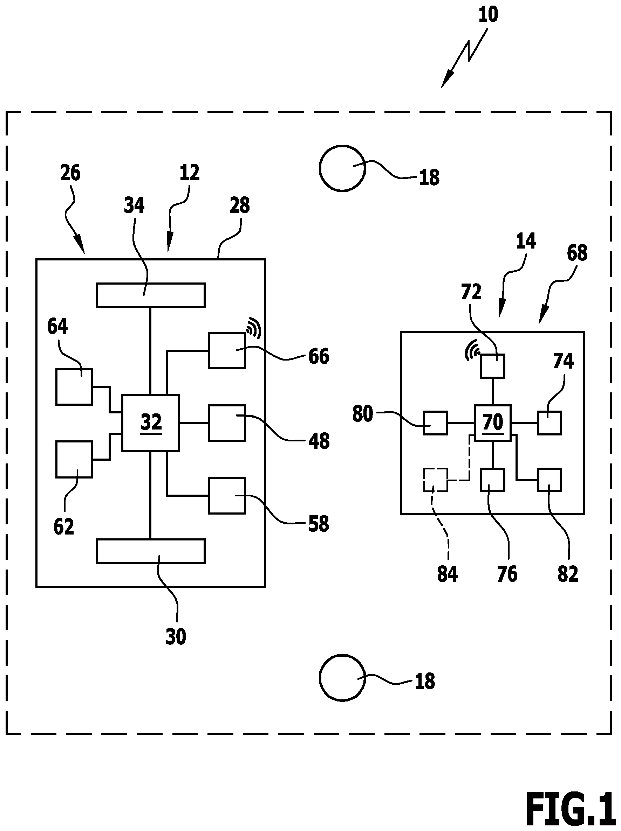

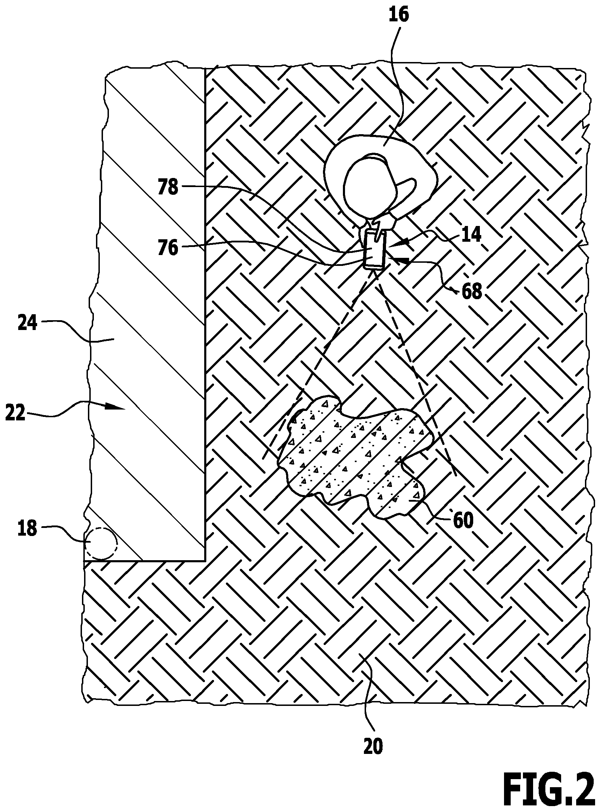

Die Zeichnung zeigt in Figur 1 schematisch eine mit dem Bezugszeichen 10 belegte vorteilhafte Ausführungsform eines erfindungsgemäßen Bodenreinigungssystems. Das Bodenreinigungssystem 10 weist ein Bodenreinigungsgerät 12 auf und mindestens ein tragbares Zusatzgerät 14 für einen Benutzer 16. Ferner weist das Bodenreinigungssystem 10 mindestens eine und bevorzugt mehrere Positionslandmarken 18 auf. Die Figur 1 zeigt beispielhaft zwei Positionslandmarken 18, die Figuren 2 bis 4 beispielhaft eine Positionslandmarke 18.

Das Bodenreinigungssystem 10 dient zur Reinigung einer in den Figuren 2 bis 4 dargestellten Bodenfläche 20. Die Bodenfläche 20 ist beispielsweise die Bodenfläche eines größeren Gebäudes, zum Beispiel eines Supermarktes. Auf der Bodenfläche 20 können vom Bodenreinigungsgerät 12 nicht-befahrbare Bereiche 22 vorhanden sein, deren einer in der Zeichnung schematisch gezeigt ist. Im vorliegenden Fall ist im Bereich 22 zum Beispiel ein Regal 24 des Supermarkts aufgestellt. Der Bereich 22 darf alternativ zum Beispiel vom Bodenreinigungsgerät 12 nicht befahren werden, weil die Bodenfläche 20 am Bereich 22 eine hierfür nicht ausgelegte Beschaffenheit aufweist.

Das Bodenreinigungsgerät 12 ist vorliegend selbstfahrend und selbstlenkend als Reinigungsroboter ausgestaltet, insbesondere als Schrubbmaschine 26. Das Bodenreinigungsgerät 12 umfasst ein Gehäuse 28 mit einem daran gehaltenen Fahrwerk 30. Das Fahrwerk 30 umfasst Räder und Antriebe für diese und ist von einer Steuereinheit 32 ansteuerbar, wodurch das Bodenreinigungsgerät 12 auf der Bodenfläche 20 gezielt verfahren werden kann.

Das Bodenreinigungsgerät 12 umfasst ferner mindestens ein Reinigungsaggregat 34, von denen mindestens eines von der Steuereinheit 32 ansteuerbar ist. Die Reinigungsaggregate 34 umfassen vorliegend einen Reinigungskopf 36, der ein Schrubbaggregat ausbildet. Der Reinigungskopf 36 umfasst mindestens eine drehend antreibbare Bürste 38, die mit einer Reinigungsflüssigkeit aus einem Vorratstank 40 des Bodenreinigungsgerätes 12 benetzt werden kann. Der Vorratstank 40 ist ebenfalls ein Reinigungsaggregat 34, ebenso wie ein Schmutzflüssigkeitstank 42, ein Saugaggregat 44 und eine Schmutzaufnahmevorrichtung 46. Von der Bodenfläche 20 mit dem Reinigungskopf 36 abgelöster Schmutz kann unter der Wirkung des Saugaggregates 44 mit der Schmutzaufnahmevorrichtung 46 abgesaugt und in den Schmutzflüssigkeitstank 42 überführt werden.

Das Bodenreinigungsgerät 12 umfasst ferner eine optische Abbildungseinheit 48, die vorliegend zwei digitale Kameras 50 aufweist. Eine erste Kamera 50 ist an einer Vorderseite 52 des Bodenreinigungsgerätes 12 positioniert, bezogen auf dessen Längsrichtung 54. Eine zweite Kamera 50 ist an einer Rückseite 56 des Bodenreinigungsgerätes 12 positioniert.

Weiter weist das Bodenreinigungsgerät 12 ein Schmutzerkennungsglied 58 auf. Abbildungen der Bodenfläche 20, die an das Bodenreinigungsgerät 12 übermittelt oder von der Abbildungseinheit 48 erstellt werden, können vom Schmutzerkennungsglied 58 analysiert werden. Das Schmutzerkennungsglied 58 kann zum Beispiel das Vorhandensein einer Verschmutzung 60 (Figuren 2 bis 4) auf der Bodenfläche 20 feststellen. Es kann die Art der Verschmutzung ermittelt werden und eine diesbezügliche Schmutzinformation an die Steuereinheit 32 bereitgestellt werden. Die Steuereinheit 32 kann basierend auf der Schmutzinformation eine Voreinstellung mindestens eines Reinigungsaggregates 34 vornehmen, zum Beispiel einen Anpressdruck des Reinigungskopfes 36 und/oder die Menge an Reinigungsflüssigkeit aus dem Vorratstank 40.

Zur Identifikation der Verschmutzung 60 kann das Schmutzerkennungsglied 58 zum Beispiel die Abbildungen der Bodenfläche 20 mit Referenzabbildungen der Bodenfläche 20 vergleichen, die in einem Speicherglied 62 des Bodenreinigungsgerätes 12 gespeichert sind. Denkbar ist auch, dass im Speicherglied 62 Eigenschaften der Bodenfläche 20 gespeichert sind, zum Beispiel deren Reflektivität, so dass durch Vergleich der Eigenschaften mit aus den Abbildungen extrahierten Merkmalen eine Verschmutzung 60 vom Schmutzerkennungsglied 58 erkannt werden kann.

Im Speicherglied 62 kann ferner eine Karte der Bodenfläche 20 hinterlegt sein. Anhand der Abbildungen, die von der Abbildungseinheit 48 erstellt werden, kann das Bodenreinigungsgerät 12 seine Position innerhalb der Karte ermitteln. Die Abbildungen dienen daher auch dem Zweck der Lokalisierung des Bodenreinigungsgerätes 12 auf der Bodenfläche 20. Zu diesem Zweck weist das Bodenreinigungsgerät 12 ein Lokalisierungsglied 64 auf. Charakteristische Merkmale der Abbildungen können extrahiert und mit in der Karte hinterlegten Landmarken verglichen werden, um die Lage und die Orientierung des Bodenreinigungsgerätes 12 zu berechnen.

Das Lokalisierungsglied 64 ermöglicht ferner, die Position des Bodenreinigungsgerätes 12 in einem relativen Bezugssystem zu ermitteln. Das relative Bezugssystem wird vorliegend definiert durch die Positionslandmarken 18. Die Positionslandmarken 18 sind insbesondere Funk-Positionslandmarken und ausgestaltet als Bluetooth-Positionslandmarken. Das die Bodenfläche 20 aufweisende Gebäude umfasst eine Mehrzahl von an ausgewählten Stellen positionierten Positionslandmarken 18, deren relative Lage zueinander im Speicherglied 62 gespeichert ist. Die Positionslandmarken 18 definieren ein relatives Bezugssystem innerhalb des Gebäudes.

Das Lokalisierungsglied 64 kann Funksignale der Positionslandmarken 18 empfangen. Die Funksignale der unterschiedlichen Positionslandmarken 18 unterscheiden sich voneinander, wodurch das Lokalisierungsglied 64 seine Position und Orientierung innerhalb des relativen Bezugssystems durch Auswertung der Funksignale ermitteln kann. Die Ortsauflösung zur Positionsbestimmung liegt bevorzugt bei ungefähr 1 m oder darunter.

Günstigerweise ist die Lage des relativen Bezugssystems mit der Karte im Speicherglied 62 verknüpft, so dass anhand der Koordinaten im relativen Bezugssystem zugleich eine Position innerhalb der Karte ermittelt werden kann.

Das Bodenreinigungsgerät 12 umfasst ferner ein Kommunikationsglied 66 zum Datenaustausch mit dem Zusatzgerät 14. Das Kommunikationsglied 66 ist ein Funk-Kommunikationsglied zur Datenübertragung zum Beispiel über ein Telefon-Mobilfunknetz oder über das Internet.

Es kann vorgesehen sein, dass das Schmutzerkennungsglied 58, das Speicherglied 62, das Lokalisierungsglied 64 und/oder das Kommunikationsglied 66 in die Steuereinheit 32 integriert oder von dieser umfasst sind.

Das Zusatzgerät ist vorliegend ausgestaltet als Smartphone 68 und umfasst eine Steuereinheit 70. Zur Kommunikation mit dem Kommunikationsglied 66 weist das Zusatzgerät 14 ein Kommunikationsglied 72 auf.

Das Zusatzgerät 14 umfasst ferner eine Abbildungseinheit 74 mit einer digitalen Kamera. Der Benutzer 16 kann mit der Abbildungseinheit 74 Abbildungen der Bodenfläche 20 erstellen.

Zur Bedienung weist das Zusatzgerät 14 eine Bedieneinheit 76 auf, die insbesondere einen Touchscreen 78 umfasst. Der Touchscreen 78 dient zur Entgegennahme von Anweisungen des Benutzers 16 an das Zusatzgerät 14 und zur Ausgabe von Hinweisen oder Signalen für den Benutzer 16.

Außerdem weist das Zusatzgerät 14 ein Lokalisierungsglied 80 auf. Mit dem Lokalisierungsglied 80 kann die Position des Zusatzgerätes 14 in dem von den Positionslandmarken 18 definierten relativen Bezugssystem ermittelt werden. Eine diesbezügliche Positionsinformation kann der Steuereinheit 70 bereitgestellt werden.

Ferner umfasst das Zusatzgerät 14 ein Speicherglied 82. Im Speicherglied 82 ist zum Beispiel ein Anwendungsprogramm gespeichert, das von der Steuereinheit 70 ausgeführt werden kann. Das Anwendungsprogramm ist beispielsweise als sogenannte "App" ausgestaltet und wird von einem Hersteller des Bodenreinigungsgerätes 12 zur Verfügung gestellt. Das Anwendungsprogramm erlaubt die Steuerung und Bedienung des Smartphones 68 in einer benutzergeführten und intuitiven Weise, um Reinigungsaufträge vom Zusatzgerät 14 an das Bodenreinigungsgerät 12 zu übermitteln.

Das Zusatzgerät 14 kann ferner ein Schmutzerkennungsglied 84 aufweisen. Mit dem Schmutzerkennungsglied 84 können Abbildungen der Bodenfläche 20 auf Verschmutzungen untersucht, diese festgestellt und eine diesbezügliche Schmutzinformation bereitgestellt werden.

Das Kommunikationsglied 72, das Lokalisierungsglied 80, das Speicherglied 82 und/oder das Schmutzerkennungsglied 84 können in die Steuereinheit 70 integriert oder von dieser umfasst sein.

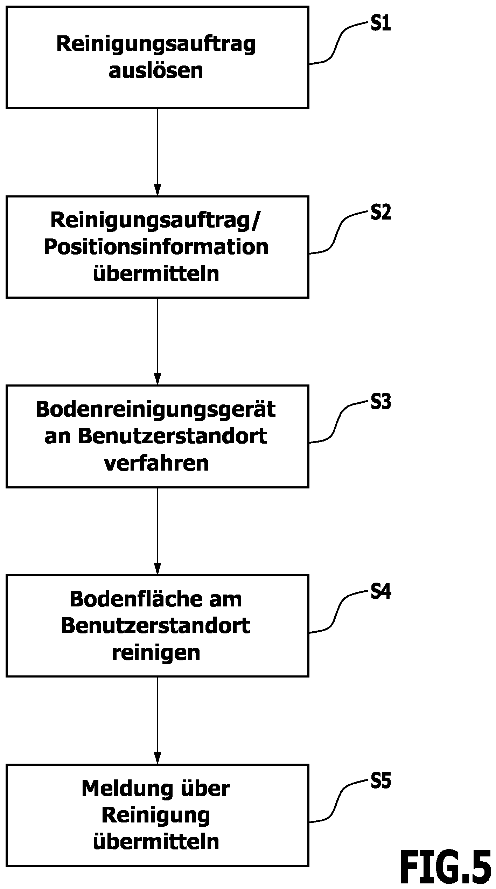

Mit dem Bodenreinigungssystem 10 kann ein vorteilhaftes Ausführungsbeispiel eines erfindungsgemäßen Verfahrens durchgeführt werden. Das Ausführungsbeispiel weist den in Figur 5 schematisch dargestellten grundsätzlichen Aufbau auf, der nachfolgend erläutert wird, um die Funktionsweise des Bodenreinigungssystems 10 zu verdeutlichen.

Der Benutzer 16, bei dem es sich zum Beispiel um einen Mitarbeiter oder Leiter des Supermarktes mit der Bodenfläche 20 handelt, bemerkt die Verschmutzung 60. Beispielsweise ist aus dem Regal 24 ein Lebensmittel gefallen, dessen Verpackung aufgeplatzt ist, so dass der Verpackungsinhalt jetzt die Bodenfläche 20 verschmutzt.

In einem Verfahrensschritt S1 löst der Benutzer an seinem Benutzerstandort einen Reinigungsauftrag an das Bodenreinigungsgerät 12 aus. Der Ursprung der Erstellung des Reinigungsauftrags ist dementsprechend der Benutzerstandort auf der Bodenfläche 20. Der Benutzerstandort ist vorzugsweise nicht auf die exakte geometrische Position des Benutzers 16 beschränkt, sondern kann beispielsweise wenige Quadratmeter im Bereich dieses exakten Standortes betragen.

Der Reinigungsauftrag wird vom Benutzer 16 über die Bedieneinheit 76 des Zusatzgerätes 14 ausgelöst. Beispielsweise ruft der Benutzer 16 zu diesem Zweck das Anwendungsprogramm auf, um den Reinigungsauftrag auszulösen. Ergänzend kann vorgesehen sein, dass der Benutzer 16 eine Abbildung der Bodenfläche 20 erstellt, in der vorzugsweise die Verschmutzung 60 dargestellt ist (Figur 1).

In einem nachfolgenden Schritt S2 wird der Reinigungsauftrag über die Kommunikationsglieder 72 und 66 an das Bodenreinigungsgerät 12 übermittelt. Zusätzlich wird eine Positionsinformation betreffend den Benutzerstandort übermittelt, wobei die Positionsinformation vom Lokalisierungsglied 80 des Zusatzgerätes 14 bereitgestellt wird.

Das Bodenreinigungsgerät 12 empfängt den Reinigungsauftrag und die damit übersandte Positionsinformation (nicht gezeigt).

Im nachfolgenden Verfahrensschritt S3 verfährt das Bodenreinigungsgerät 12 zum Benutzerstandort. Zu diesem Zweck wird die Ist-Position des Bodenreinigungsgerätes 12 anhand von dessen Lokalisierungsglied 64 ermittelt. Die SollPosition entspricht der Positionsinformation des Benutzerstandortes, wie sie vom Bodenreinigungsgerät 12 empfangen wurde.

Zum Bewegen des Bodenreinigungsgerätes 12 wird das Fahrwerk 30 von der Steuereinheit 32 in an sich bekannter Weise angesteuert. Die Lokalisierung des Bodenreinigungsgerätes 12 kann im relativen Bezugssystem der Positionslandmarken 18 erfolgen. Alternativ oder ergänzend kann, wie erwähnt, die Positionsinformation in die im Speicherglied 62 gespeicherte Karte übertragen werden. In beiden Fällen kann die Lokalisierung und Navigation des Bodenreinigungsgerätes 12 anhand von Abbildungen der Umgebung, speziell der Bodenfläche, des Bodenreinigungsgerätes 12 vorgenommen werden, die von der Abbildungseinheit 48 erstellt werden.

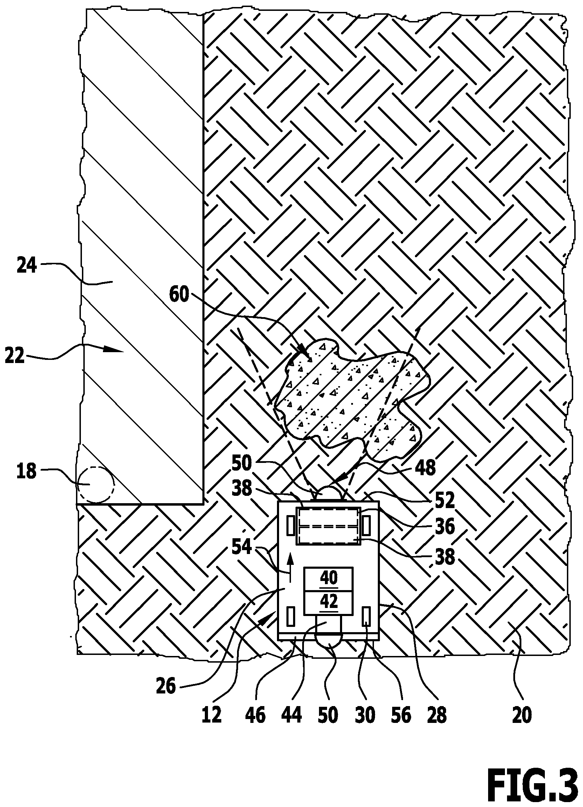

Nähert sich das Bodenreinigungsgerät 12 dem Benutzerstandort, kann das Vorhandensein der Verschmutzung 60 in den Abbildungen der Bodenfläche 20 vom Schmutzerkennungsglied 58 festgestellt werden. Das Bodenreinigungsgerät 12 erkennt die Verschmutzung 60, stellt fest, dass es sich am ursprünglichen Standort des Benutzers 16 befindet, und beginnt mit der Reinigung der Bodenfläche 20. Dies ist in Figur 3 dargestellt.

Im vorliegenden Beispiel hat sich der Benutzer 16 bereits entfernt. Der Reinigungsauftragserstellungsort ist jedoch unverändert geblieben, nämlich der ursprüngliche Benutzerstandort.

Wenn, wie vorstehend erwähnt, vom Zusatzgerät 14 eine Abbildung der Bodenfläche 20 an das Bodenreinigungsgerät 12 übertragen worden ist, kann diese Abbildung mit den von der Abbildungseinheit 48 erstellten Abbildungen verglichen werden. Dies erleichtert es dem Bodenreinigungsgerät 12, die Verschmutzung 60 aufzufinden.

Wird die Verschmutzung 60 vom Schmutzerkennungsglied 58 erkannt, kann die Verschmutzung 60 zur Reinigung vom Bodenreinigungsgerät 12 gezielt angefahren werden. Alternativ oder ergänzend ist insbesondere denkbar, dass anhand der bereitgestellten Schmutzinformation eine Voreinstellung mindestens eines Reinigungsaggregates 34 vorgenommen wird und/oder ein geeigneter Reinigungspfad oder ein geeignetes Reinigungsmuster zur möglichst zielgerichteten Abreinigung der Bodenfläche 20 ausgewählt wird.

Alternativ kann vorgesehen sein, dass das Bodenreinigungsgerät 12 nach Erhalt des Reinigungsauftrags an den Benutzerstandort verfährt. Stellt es an diesem im Rahmen der Genauigkeit der Positionsbestimmung keine Verschmutzung fest, kann das Bodenreinigungsgerät 12 innerhalb einer vorgegebenen oder vorgebbaren Umgebung nach einer Verschmutzung suchen (beispielsweise in einem Radius von ca. 1 m bis 3 m).

Im nachfolgenden Verfahrensschritt S4 wird die Bodenfläche 20 am Benutzerstandort gemäß dem Reinigungsauftrag gereinigt. Der Reinigungsvorgang selber ist in der Zeichnung nicht dargestellt.

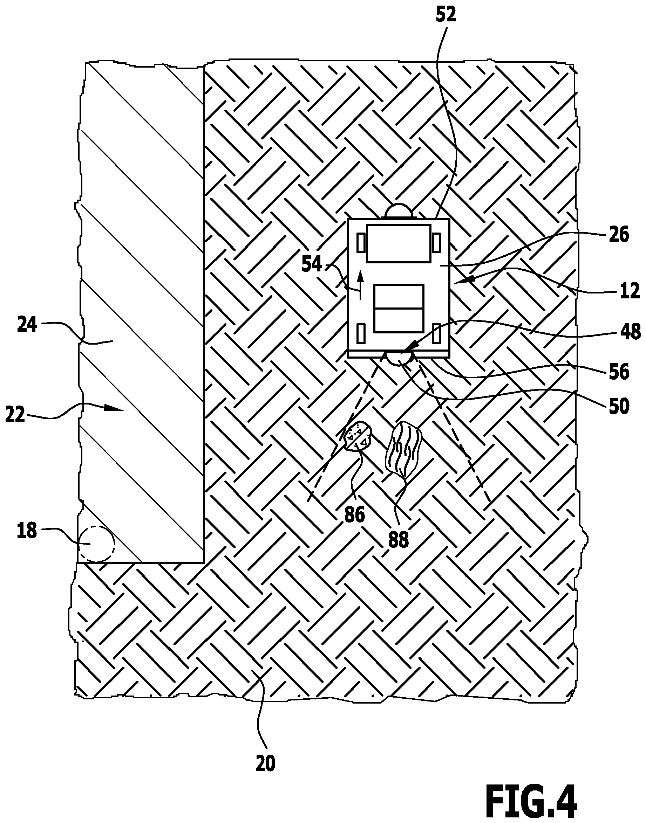

Zum Abschluss des Verfahrensschrittes S4 wird im Anschluss an die Reinigung eine Überprüfung der Bodenfläche 20 auf Sauberkeit vorgenommen. Dies ist in Figur 4 dargestellt. Beispielsweise wird mit der Kamera 50 an der Rückseite 56 beim Überfahren der Verschmutzung 60 eine Abbildung der Bodenfläche 20 erstellt und auf Vorhandensein einer Verschmutzung überprüft. Erforderlichenfalls wird eine nochmalige Reinigung der Bodenfläche 20 am Benutzerstandort durchgeführt.

Figur 4 zeigt beispielhaft, wie nach dem Reinigungsvorgang ein Restschmutz 86 und Restfeuchtigkeit 88 auf der Bodenfläche 20 verbleiben. Das Bodenreinigungsgerät 12 würde die Reinigung daher fortsetzen, bis ein hinreichender Grad an Sauberkeit der Bodenfläche 20 besteht.

Im nachfolgenden Verfahrensschritt S5 wird vom Bodenreinigungsgerät 12 an das Zusatzgerät 14 eine Meldung über die erfolgreiche Reinigung der Bodenfläche 20 übertragen. Die Meldung wird dem Benutzer 16 am Bildschirm des Touchscreens 78 angezeigt. Auch ein akustischer Hinweis ist möglich (nicht gezeigt).

Mit dem erfindungsgemäßen Bodenreinigungssystem und Verfahren kann eine gezielte, bedarfsabhängige Reinigung der Bodenfläche 20, ausgelöst vom Benutzer 16, durchgeführt werden. Räumlich begrenzte Verschmutzungen 60 können vom Bodenreinigungsgerät 12 gezielt angefahren und entfernt werden.

Auf die bereits voranstehend erläuterten weiteren vorteilhaften Ausführungsformen des Bodenreinigungssystems und Ausführungsbeispiele des Verfahrens wird verwiesen. Insbesondere kann die Erfindung folgendermaßen umgesetzt sein:
Der Benutzer 16 übermittelt dem Bodenreinigungsgerät 12 eine Abbildung der Bodenfläche 20. Die Abbildung umfasst zugleich die Positionsinformation, denn charakteristische Merkmale in der Abbildung können vom Bodenreinigungsgerät 12 herangezogen werden, um den Benutzerstandort zu ermitteln.

Der Reinigungsauftrag enthält keine übermittelte Abbildung. So kann beispielsweise insbesondere allein das Übermitteln einer Positionsinformation vom Zusatzgerät 14 an das Bodenreinigungsgerät 12 als Reinigungsauftrag aufgefasst werden, die Bodenfläche 20 am Benutzerstandort zu reinigen.

Bereits im Zusatzgerät 14 wird die Verschmutzung 60 vom Schmutzerkennungsglied 84 erkannt und eine Schmutzinformation als Bestandteil des Reinigungsauftrags an das Bodenreinigungsgerät 12 übermittelt. Die Schmutzinformation kann auch eine Information betreffend die Art der Verschmutzung zur möglichen Einstellung eines Reinigungsaggregates 34 umfassen.

Der Benutzer 16 kann an der Bedieneinheit 76 eine Schmutzinformation über die Art der Verschmutzung und/oder eine Reinigungsanweisung zur Vorauswahl eines Reinigungsaggregates, eines Reinigungsmusters oder eines Reinigungspfades bereitstellen.

### Bezugszeichenliste:

- 10: Bodenreinigungssystem
- 12: Bodenreinigungsgerät
- 14: Zusatzgerät
- 16: Benutzer
- 18: Positionslandmarke
- 20: Bodenfläche
- 22: Bereich
- 24: Regal
- 26: Schrubbmaschine
- 28: Gehäuse
- 30: Fahrwerk
- 32: Steuereinheit
- 34: Reinigungsaggregat
- 36: Reinigungskopf
- 38: Bürste
- 40: Vorratstank
- 42: Schmutzflüssigkeitstank
- 44: Saugaggregat
- 46: Schmutzaufnahmevorrichtung
- 48: Abbildungseinheit
- 50: Kamera
- 52: Vorderseite
- 54: Längsrichtung
- 56: Rückseite
- 58: Schmutzerkennungsglied
- 60: Verschmutzung
- 62: Speicherglied
- 64: Lokalisierungsglied
- 66: Kommunikationsglied
- 68: Smartphone
- 70: Steuereinheit
- 72: Kommunikationsglied
- 74: Abbildungseinheit
- 76: Bedieneinheit
- 78: Touchscreen
- 80: Lokalisierungsglied
- 82: Speicherglied
- 84: Schmutzerkennungsglied
- 86: Restschmutz
- 88: Feuchtigkeit

## Patentansprüche

1. Bodenreinigungssystem, umfassend
- ein selbstfahrendes und selbstlenkendes Bodenreinigungsgerät (12) zum Reinigen einer Bodenfläche (20), das eine Steuereinheit (32), ein ansteuerbares Fahrwerk (30), mindestens ein Reinigungsaggregat (34), ein Lokalisierungsglied (64) und ein Kommunikationsglied (66) aufweist; und
- ein tragbares Zusatzgerät (14) für einen Benutzer (16), das eine Bedieneinheit (76), eine Steuereinheit (70) und ein Kommunikationsglied (72) aufweist,
wobei vom Benutzer (16) über die Bedieneinheit (76) ein Reinigungsauftrag, die Bodenfläche (20) am Benutzerstandort zu reinigen, an das Bodenreinigungsgerät (12) auslösbar ist und der Reinigungsauftrag sowie eine Positionsinformation betreffend den Benutzerstandort zusammen mit dem oder als Bestandteil des Reinigungsauftrag(es) an das Bodenreinigungsgerät (12) übermittelbar ist, und wobei das Bodenreinigungsgerät (12) zum Benutzerstandort verfahrbar und die Bodenfläche (20) am Benutzerstandort mit dem mindestens einen Reinigungsaggregat (34) gemäß dem Reinigungsauftrag reinigbar ist.

2. Bodenreinigungssystem nach Anspruch 1, **dadurch gekennzeichnet, dass** die Positionsinformation allein den Reinigungsauftrag ausbildet und als solcher vom Bodenreinigungsgerät (12) interpretiert wird.

3. Bodenreinigungssystem nach Anspruch 1 oder 2, **dadurch gekennzeichnet, dass** der Benutzerstandort am Zusatzgerät (14) über die Bedieneinheit (76) von einem Benutzer (16) vorgebbar ist und/oder dass die Positionsinformation vom Zusatzgerät (14) ohne weiteres Zutun des Benutzers (16) an das Bodenreinigungsgerät übermittelbar ist.

4. Bodenreinigungssystem nach einem der voranstehenden Ansprüche, **dadurch gekennzeichnet, dass** das Zusatzgerät (14) ein Lokalisierungsglied (80) aufweist, mit dem der Benutzerstandort zum Bereitstellen der Positionsinformation anhand zumindest eines der Folgenden ermittelbar ist:
- die Position des Zusatzgerätes (14) in einem relativen Bezugssystem, das anhand von mindestens einer Positionslandmarke (18) definiert wird;
- die Position des Zusatzgerätes (14) in einem absoluten Bezugssystem.

5. Bodenreinigungssystem nach einem der voranstehenden Ansprüche, **dadurch gekennzeichnet, dass** das Bodenreinigungssystem (10) eine Lokalisierungseinheit umfasst, anhand derer die Position des Benutzers (16) ermittelbar ist, und dass die Positionsinformation von der Lokalisierungseinheit an das Bodenreinigungsgerät (12) auf dessen Anfrage hin übermittelbar ist.

6. Bodenreinigungssystem nach einem der voranstehenden Ansprüche, **dadurch gekennzeichnet, dass** das Zusatzgerät (14) ein Speicherglied (82) aufweist, in dem eine Karte der Bodenfläche (20) gespeichert ist, sowie ein Lokalisierungsglied (80) zum Ermitteln des Benutzerstandortes innerhalb der Karte zum Bereitstellen der Positionsinformation.

7. Bodenreinigungssystem nach einem der voranstehenden Ansprüche, **dadurch gekennzeichnet, dass** der Standort des Bodenreinigungsgerätes (12) anhand von dessen Lokalisierungsglied (64) ermittelbar ist:
- in einem relativen Bezugssystem, das anhand von mindestens einer Positionslandmarke (18) definiert wird;
- im absoluten Bezugssystem; und/oder
- in einer Karte der Bodenfläche (20), die in einem Speicherglied (62) des Bodenreinigungsgerätes (12) gespeichert ist.

8. Bodenreinigungssystem nach einem der voranstehenden Ansprüche, **dadurch gekennzeichnet, dass** das Lokalisierungsglied (80) des Zusatzgerätes (14) und/oder das Lokalisierungsglied (64) des Bodenreinigungsgerätes (12) zum Zusammenwirken mit Funk-Positionslandmarken (18), insbesondere Bluetooth-Positionslandmarken (18), und/oder optischen Positionslandmarken ausgebildet sind, und/oder dass das Bodenreinigungssystem (10) mindestens eine Positionslandmarke (18) zur Definition eines relativen Bezugssystems umfasst.

9. Bodenreinigungssystem nach einem der voranstehenden Ansprüche, **dadurch gekennzeichnet, dass** das Zusatzgerät (14) eine Abbildungseinheit (74) aufweist, mit der eine Abbildung der Bodenfläche (20) erstellbar ist, und dass zumindest eines der Folgenden durchführbar ist:
- Übertragen der Abbildung an das Bodenreinigungsgerät (12), wobei anhand von dessen Lokalisierungsglied (64) aufgrund von charakteristischen Merkmalen in der Abbildung der Benutzerstandort ermittelbar ist;
- Ermitteln des Benutzerstandortes aufgrund von charakteristischen Merkmalen in der Abbildung anhand eines Lokalisierungsgliedes (80) des Zusatzgerätes (14).

10. Bodenreinigungssystem nach einem der voranstehenden Ansprüche, **dadurch gekennzeichnet, dass** das Bodenreinigungsgerät (12) den Empfang einer optischen Abbildung der Bodenfläche (20), vom Zusatzgerät (14) übermittelt, als Reinigungsauftrag auffasst, die Bodenfläche (20) an der in der Abbildung dargestellten Position zu reinigen, und/oder dass das Bodenreinigungsgerät (12) eine Abbildungseinheit (48) zum Erstellen von Abbildungen der Umgebung aufweist und dass vom Bodenreinigungsgerät (12) anhand seines Lokalisierungsgliedes (64) sein Standort innerhalb der Umgebung anhand der Abbildungen ermittelbar ist.

11. Bodenreinigungssystem nach einem der voranstehenden Ansprüche, **dadurch gekennzeichnet, dass** das Bodenreinigungssystem (10) im Zusatzgerät (14) und/oder im Bodenreinigungsgerät (12) mindestens ein Schmutzerkennungsglied (58, 84) aufweist zum Auffinden einer Verschmutzung (60) in einer Abbildung der Bodenfläche (20), die von einer Abbildungseinheit (48, 74) des Zusatzgerätes (14) oder des Bodenreinigungsgerätes (12) erstellt wurde, sowie zum Bereitstellen einer diesbezüglichen Schmutzinformation, wobei vorzugsweise die Art der Verschmutzung (60) erkennbar ist, und/oder vorzugsweise die Verschmutzung (60) am Benutzerstandort vom Bodenreinigungsgerät (12) anhand der Schmutzinformation gezielt zum Reinigen anfahrbar ist.

12. Bodenreinigungssystem nach einem der voranstehenden Ansprüche, **dadurch gekennzeichnet, dass** der Reinigungsauftrag eine Schmutzinformation betreffend eine Art der Verschmutzung (60) der Bodenfläche (20) aufweist und/oder eine Reinigungsanweisung, die eine Information betreffend die Vorauswahl und/oder Einstellung mindestens eines Reinigungsaggregates (34) umfasst, insbesondere dass die Schmutzinformation und/oder die Reinigungsanweisung vom Benutzer (16) an der Bedieneinheit (76) vorgebbar ist.

13. Bodenreinigungssystem nach Anspruch 11 oder 12, **dadurch gekennzeichnet, dass** vom Bodenreinigungsgerät (12) abhängig von der Schmutzinformation vor der Reinigung ein Reinigungsmodus einstellbar oder auswählbar ist, beispielsweise mindestens ein Reinigungsaggregat (34) und/oder mindestens ein Reinigungsmuster oder Reinigungspfad.

14. Bodenreinigungssystem nach einem der voranstehenden Ansprüche, **dadurch gekennzeichnet, dass** vom Bodenreinigungsgerät (12) nach Abarbeiten des Reinigungsauftrags zumindest eines der Folgenden durchführbar ist:
- Überprüfen der Bodenfläche (20) auf Sauberkeit, wobei vorzugsweise im Fall der Feststellung, dass die Bodenfläche (20) nicht hinreichend sauber ist, vom Bodenreinigungsgerät (12) mindestens eine weitere Reinigung der Bodenfläche (20) durchführbar ist;
- Übersenden einer Meldung an das Zusatzgerät (14) zur Signalisierung für den Benutzer (16), dass die Bodenfläche (20) mindestens einmal gereinigt wurde.

15. Bodenreinigungssystem nach einem der Ansprüche 1 bis 13, **dadurch gekennzeichnet, dass** vom Bodenreinigungsgerät (12) eine Meldung an das Zusatzgerät (14) zur Signalisierung für den Benutzer (16) übermittelbar ist, wenn am Benutzerstandort keine Verschmutzung (60) auffindbar ist.

16. Bodenreinigungssystem nach einem der voranstehenden Ansprüche, **dadurch gekennzeichnet, dass** die Bedieneinheit (76) des Zusatzgerätes (14) zur Entgegennahme einer Anweisung nach mindestens einem der Folgenden ausgestaltet ist:
- berührungssensitiv bzw. haptisch durch Druck- und/oder Gestensteuerung, wobei die Bedieneinheit insbesondere ein(en) Touchscreen (78) ist oder umfasst;
- akustisch durch Sprachsteuerung, wobei die Bedieneinheit ein Mikrofon ist oder umfasst;
- trägheitsbasiert und/oder neigungsbasiert, wobei die Bedieneinheit mindestens einen Trägheitssensor und/oder Neigungssensor umfasst.

17. Bodenreinigungssystem nach einem der voranstehenden Ansprüche, **dadurch gekennzeichnet, dass** das Zusatzgerät (14) ein Smartphone (68), ein Tabletcomputer oder eine Smartwatch ist, und/oder dass das mindestens eine Reinigungsaggregat (34) ein Kehraggregat, ein Schrubbaggregat (36), ein Wischaggregat oder ein Saugaggregat (44) ist oder umfasst.

18. Verfahren zum Reinigen einer Bodenfläche mit einem Bodenreinigungssystem nach einem der voranstehenden Ansprüche, wobei von einem Benutzer über die Bedieneinheit des Zusatzgerätes ein Reinigungsauftrag, die Bodenfläche am Benutzerstandort zu reinigen, an das Bodenreinigungsgerät ausgelöst wird, der Reinigungsauftrag sowie eine Positionsinformation über den Benutzerstandort zusammen mit dem oder als Bestandteil des Reinigungsauftrag(es) an das Bodenreinigungsgerät übermittelt wird, und wobei das Bodenreinigungsgerät zum Benutzerstandort verfährt und die Bodenfläche mit dem mindestens einen Reinigungsaggregat gemäß dem Reinigungsauftrag reinigt.

## Claims

1. Floor cleaning system, comprising
- a self-propelled and self-steering floor cleaning apparatus (12) for cleaning a floor surface (20), which floor cleaning apparatus (12) comprises a control unit (32), a controllable chassis (30), at least one cleaning unit (34), a localization member (64) and a communication member (66); and
- a portable accessory device (14) for a user (16) that comprises an operating unit (76), a control unit (70) and a communication member (72),
wherein a cleaning order to the floor cleaning apparatus (12) to clean the floor surface (20) at the user location is triggerable by the user (16) via the operating unit (76) and the cleaning order as well as a position information relating to the user location is transmittable together with or as part of the cleaning order to the floor cleaning apparatus (12), and
wherein the floor cleaning apparatus (12) is movable to the user location and the floor surface (20) at the user location is cleanable in accordance with the cleaning order by way of the at least one cleaning unit (34).

2. Floor cleaning system in accordance with claim 1, **characterized in that** the position information by itself forms the cleaning order and is interpreted as such by the floor cleaning apparatus (12).

3. Floor cleaning system in accordance with claim 1 or 2, **characterized in that** the user location is predeterminable at the accessory device (14) by a user (16) via the operating unit (76) and/or **in that** the position information is transmittable via the accessory device (14) to the floor cleaning apparatus without further interference of the user (16).

4. Floor cleaning system in accordance with any one of the preceding claims, **characterized in that** the accessory device (14) comprises a localization member (80) by way of which the user location is determinable for providing the position information based on at least one of the following:
- the position of the accessory device (14) in a relative reference system which is defined on the basis of at least one position landmark (18);
- the position of the accessory device (14) in an absolute reference system.

5. Floor cleaning system in accordance with any one of the preceding claims, **characterized in that** the floor cleaning system (10) comprises a localization member by way of which the position of the user (16) is determinable, and **in that** the position information is transmittable from the localization member to the floor cleaning apparatus (12) upon request thereof.

6. Floor cleaning system in accordance with any one of the preceding claims, **characterized in that** the accessory device (14) comprises a storage member (82) in which a map of the floor surface (20) is stored, and a localization member (80) for determining the user location within the map for providing the position information.

7. Floor cleaning system in accordance with any one of the preceding claims, **characterized in that** the location of the floor cleaning apparatus (12) is determinable by way of the localization member (64) thereof using at least one of the following:
- a relative reference system which is defined by at least one position landmark (18);
- the absolute reference system; and/or
- a map of the floor surface (20) which is stored in a storage member (62) of the floor cleaning apparatus (12).

8. Floor cleaning system in accordance with any one of the preceding claims, **characterized in that** the localization member (80) of the accessory device (14) and/or the localization member (64) of the floor cleaning apparatus (12) are configured for interacting with radio position landmarks (18), in particular Bluetooth position landmarks (18), and/or optical position landmarks, and/or **in that** the floor cleaning system (10) comprises at least one position landmark (18) for defining a relative reference system.

9. Floor cleaning system in accordance with any one of the preceding claims, **characterized in that** the accessory device (14) comprises an imaging unit (74) with which an image of the floor surface (20) is creatable and **in that** at least one of the following is performable:
- the image is transferred to the floor cleaning apparatus (12), wherein, by way of the localization member (64) thereof, the user location is determinable on the basis of characteristic features in the image;
- the user location is determined on the basis of characteristic features in the image by way of a localization member (80) of the accessory device (14).

10. Floor cleaning system in accordance with any one of the preceding claims, **characterized in that** the floor cleaning apparatus (12) takes the receipt of an optical image of the floor surface (20), transmitted from the accessory device (14), as a cleaning order to clean the floor surface (20) at the position shown in the image, and/or **in that** the floor cleaning apparatus (12) comprises an imaging unit (48) for creating images of the environment and **in that**, by way of the floor cleaning apparatus (12), on the basis of the localization member (64) thereof, its own location within the environment is determinable on the basis of said images.

11. Floor cleaning system in accordance with any one of the preceding claims, **characterized in that** the floor cleaning system (10) comprises, in the accessory device (14) and/or in the floor cleaning apparatus (12), at least one dirt detection member (58, 84) for locating dirt (60) in an image of the floor surface (20) that has been created by an imaging unit (48, 74) of the accessory device (14) or of the floor cleaning apparatus (12), and for providing a corresponding dirt information, preferably wherein the type of dirt (60) is detectable, and/or, based on the dirt information, the spot of dirt (60) at the user location is preferably visitable in a targeted manner by the floor cleaning apparatus (12) for cleaning.

12. Floor cleaning system in accordance with any one of the preceding claims, **characterized in that** the cleaning order comprises dirt information relating to a type of dirt (60) on the floor surface (20) and/or a cleaning instruction comprising information relating to the preselection and/or setting of at least one cleaning unit (34), in particular in that the dirt information and/or the cleaning instruction is predeterminable by the user (16) at the operating unit (76).

13. Floor cleaning system in accordance with claim 11 or 12, **characterized in that**, depending on the dirt information, a cleaning mode is settable or selectable by the floor cleaning apparatus (12) prior to cleaning, for example at least one cleaning unit (34) and/or at least one cleaning pattern or cleaning path.

14. Floor cleaning system in accordance with any one of the preceding claims, **characterized in that** at least one of the following is performable by the floor cleaning apparatus (12) after execution of the cleaning order:
- the floor surface (20) is checked for cleanliness, wherein preferably, if it is determined that the floor surface (20) is not sufficiently clean, at least one further cleaning of the floor surface (20) is performable by the floor cleaning apparatus (12);
- a message is sent to the accessory device (14) for signalling the user (16) that the floor surface (20) has been cleaned at least once.

15. Floor cleaning system in accordance with any one of claims 1 to 13, **characterized in that** a message is transmittable from the floor cleaning apparatus (12) to the accessory device (14) for signalling the user (16) if no dirt (60) can be located at the user location.

16. Floor cleaning system in accordance with any one of the preceding claims, **characterized in that** the operating unit (76) of the accessory device (14) is configured according to at least one of the following for receiving an instruction:
- touch-sensitive or haptic through pressure control and/or gesture control, wherein the operating unit is or comprises a touchscreen (78) in particular;
- audio through voice control, wherein the operating unit is or comprises a microphone;
- inertia-based and/or tilt-based, wherein the operating unit comprises at least one inertial sensor and/or tilt sensor.

17. Floor cleaning system in accordance with any one of the preceding claims, **characterized in that** the accessory device (14) is a smartphone (68), a tablet computer or a smartwatch, and/or **in that** the at least one cleaning unit (34) is or comprises a sweeping unit, a scrubbing unit (36), a wiping unit or a suction unit (44).

18. Method for cleaning a floor surface using a floor cleaning system in accordance with any one of the preceding claims, wherein a cleaning order to clean the floor surface (20) at the user location is triggered to the floor cleaning apparatus by the user via the operating unit of the accessory device and the cleaning order as well as a position information relating to the user location is transmittable together with or as part of the cleaning order is transmitted to the floor cleaning apparatus and wherein the floor cleaning apparatus moves to the user location and cleans the floor surface by way of the at least one cleaning unit in accordance with the cleaning order.

## Revendications

1. Système de nettoyage des sols, comprenant
- un appareil de nettoyage des sols (12) autopropulsé et autodirecteur pour le nettoyage d'une surface de sol (20), qui présente une unité de commande (32), un châssis (30) pouvant être commandé, au moins un ensemble de nettoyage (34), un organe de localisation (64) et un organe de communication (66) ; et
- un appareil additionnel (14) portatif pour un utilisateur (16), qui présente une unité de commande utilisateur (76), une unité de commande (70) et un organe de communication (72),
dans lequel un ordre de nettoyage à l'appareil de nettoyage des sols (12), pour le nettoyage de la surface de sol (20) à l'emplacement de l'utilisateur, peut être déclenché par l'utilisateur (16) par l'intermédiaire de l'unité de commande utilisateur (76) et l'ordre de nettoyage ainsi qu'une information de position concernant l'emplacement de l'utilisateur peuvent être transmis conjointement avec ou en tant que partie de l'ordre de nettoyage à l'appareil de nettoyage des sols (12), et dans lequel l'appareil de nettoyage des sols (12) peut se déplacer vers l'emplacement de l'utilisateur et la surface de sol (20) à l'emplacement de l'utilisateur peut être nettoyée avec l'au moins un ensemble de nettoyage (34) conformément à l'ordre de nettoyage.

2. Système de nettoyage des sols selon la revendication 1, **caractérisé en ce que** l'information de position réalise uniquement l'ordre de nettoyage et est interprétée en tant que telle par l'appareil de nettoyage des sols (12).

3. Système de nettoyage des sols selon la revendication 1 ou 2, **caractérisé en ce que** l'emplacement de l'utilisateur peut être prédéfini par un utilisateur (16) sur l'appareil additionnel (14) par l'intermédiaire de l'unité de commande utilisateur (76) et/ou que l'information de position peut être transmise à l'appareil de nettoyage des sols par l'appareil additionnel (14) sans intervention supplémentaire de l'utilisateur (16).

4. Système de nettoyage des sols selon l'une quelconque des revendications précédentes, **caractérisé en ce que** l'appareil additionnel (14) présente un organe de localisation (80), avec lequel l'emplacement de l'utilisateur, pour fournir l'information de position, peut être déterminé à l'aide d'au moins un de ce qui suit :
- la position de l'appareil additionnel (14) dans un système de référence relatif, qui est défini à l'aide d'au moins un point de repère de position (18) ;
- la position de l'appareil additionnel (14) dans un système de référence absolu.

5. Système de nettoyage des sols selon l'une quelconque des revendications précédentes, **caractérisé en ce que** le système de nettoyage des sols (10) comprend une unité de localisation, à l'aide de laquelle la position de l'utilisateur (16) peut être déterminée, et que l'information de position peut être transmise par l'unité de localisation à l'appareil de nettoyage des sols (12) sur demande de celui-ci.

6. Système de nettoyage des sols selon l'une quelconque des revendications précédentes, **caractérisé en ce que** l'appareil additionnel (14) présente un organe de mémoire (82), dans lequel une carte de la surface de sol (20) est mise en mémoire, ainsi qu'un organe de localisation (80) destiné à déterminer l'emplacement de l'utilisateur à l'intérieur de la carte pour fournir l'information de position.

7. Système de nettoyage des sols selon l'une quelconque des revendications précédentes, **caractérisé en ce que** l'emplacement de l'appareil de nettoyage des sols (12) peut être déterminé à l'aide de l'organe de localisation (64) de celui-ci :
- dans un système de référence relatif, qui est défini à l'aide d'au moins un point de repère de position (18) ;
- dans le système de référence absolu ; et/ou
- dans une carte de la surface de sol (20), qui est mise en mémoire dans un organe de mémoire (62) de l'appareil de nettoyage des sols (12).

8. Système de nettoyage des sols selon l'une quelconque des revendications précédentes, **caractérisé en ce que** l'organe de localisation (80) de l'appareil additionnel (14) et/ou l'organe de localisation (64) de l'appareil de nettoyage des sols (12) sont réalisés pour coopérer avec des points de repère de position radio (18), en particulier des points de repère de position Bluetooth (18), et/ou des points de repère de position optiques, et/ou que le système de nettoyage des sols (10) comprend au moins un point de repère de position (18) pour la définition d'un système de référence relatif.

9. Système de nettoyage des sols selon l'une quelconque des revendications précédentes, **caractérisé en ce que** l'appareil additionnel (14) présente une unité d'imagerie (74), avec laquelle une image de la surface de sol (20) peut être élaborée, et qu'au moins un de ce qui suit peut être effectué :
- transmission de l'image à l'appareil de nettoyage des sols (12), dans lequel l'emplacement de l'utilisateur peut être déterminé à l'aide de l'organe de localisation (64) de celui-ci sur la base de caractéristiques distinctives dans l'image ;
- détermination de l'emplacement de l'utilisateur sur la base de caractéristiques distinctives dans l'image à l'aide d'un organe de localisation (80) de l'appareil additionnel (14).

10. Système de nettoyage des sols selon l'une quelconque des revendications précédentes, **caractérisé en ce que** l'appareil de nettoyage des sols (12) comprend la réception d'une image optique de la surface de sol (20), transmise par l'appareil additionnel (14), comme ordre de nettoyage pour le nettoyage de la surface de sol (20) dans la position représentée dans l'image, et/ou que l'appareil de nettoyage des sols (12) présente une unité d'imagerie (48) pour l'élaboration d'images de l'environnement et que son emplacement à l'intérieur de l'environnement peut être déterminé par l'appareil de nettoyage des sols (12) à l'aide de son organe de localisation (64) à l'aide des images.

11. Système de nettoyage des sols selon l'une quelconque des revendications précédentes, **caractérisé en ce que** le système de nettoyage des sols (10) présente dans l'appareil additionnel (14) et/ou dans l'appareil de nettoyage des sols (12) au moins un organe d'identification de saleté (58, 84) pour découvrir une salissure (60) dans une image de la surface de sol (20), qui a été élaborée par une unité d'imagerie (48, 74) de l'appareil additionnel (14) ou de l'appareil de nettoyage des sols (12), ainsi que pour fournir une information de saleté associée, dans lequel de préférence le type de salissure (60) peut être identifié, et/ou de préférence la salissure (60) à l'emplacement de l'utilisateur peut être atteinte par l'appareil de nettoyage des sols (12) à l'aide de l'information de saleté de manière ciblée aux fins de nettoyage.

12. Système de nettoyage des sols selon l'une quelconque des revendications précédentes, **caractérisé en ce que** l'ordre de nettoyage présente une information de saleté concernant un type de salissure (60) de la surface de sol (20) et/ou une instruction de nettoyage, qui comprend une information concernant la présélection et/ou le réglage d'au moins un ensemble de nettoyage (34), en particulier que l'information de saleté et/ou l'instruction de nettoyage peuvent être prédéfinies par l'utilisateur (16) au niveau de l'unité de commande utilisateur (76).

13. Système de nettoyage des sols selon la revendication 11 ou 12, **caractérisé en ce qu'**un mode de nettoyage peut être réglé ou sélectionné par l'appareil de nettoyage des sols (12) en fonction de l'information de saleté avant le nettoyage, par exemple au moins un ensemble de nettoyage (34) et/ou au moins un modèle de nettoyage ou chemin de nettoyage.

14. Système de nettoyage des sols selon l'une quelconque des revendications précédentes, **caractérisé en ce qu'**au moins un de ce qui suit peut être effectué par l'appareil de nettoyage des sols (12) après l'exécution de l'ordre de nettoyage :
- contrôle de la propreté de la surface de sol (20), dans lequel de préférence, au cas où il serait constaté que la surface de sol (20) n'est pas suffisamment propre, au moins un autre nettoyage de la surface de sol (20) peut être effectué par l'appareil de nettoyage des sols (12) ;
- envoi d'un message à l'appareil additionnel (14) pour signaler à l'utilisateur (16) que la surface de sol (20) a été nettoyée au moins une fois.

15. Système de nettoyage des sols selon l'une quelconque des revendications 1 à 13, **caractérisé en ce qu'**un message peut être transmis à l'appareil additionnel (14) par l'appareil de nettoyage des sols (12) pour signaler à l'utilisateur (16) qu'aucune salissure (60) ne peut être découverte à l'emplacement de l'utilisateur.

16. Système de nettoyage des sols selon l'une quelconque des revendications précédentes, **caractérisé en ce que** l'unité de commande utilisateur (76) de l'appareil additionnel (14) est conçue pour recevoir une instruction après au moins un de ce qui suit :
- par effleurement ou de manière haptique par commande à pression et/ou gestuelle, dans lequel l'unité de commande utilisateur est ou comprend en particulier un écran tactile (78) ;
- de manière acoustique par commande vocale, dans lequel l'unité de commande utilisateur est ou comprend un microphone ;
- de manière basée sur l'inertie et/ou basée sur l'inclinaison, dans lequel l'unité de commande utilisateur comprend au moins un capteur d'inertie et/ou capteur d'inclinaison.

17. Système de nettoyage des sols selon l'une quelconque des revendications précédentes, **caractérisé en ce que** l'appareil additionnel (14) est un téléphone intelligent (68), une tablette numérique ou une montre intelligente, et/ou que l'au moins un ensemble de nettoyage (34) est ou comprend un ensemble de balayage, un ensemble de lessivage (36), un ensemble d'essuyage ou un ensemble d'aspiration (44).

18. Procédé de nettoyage d'une surface de sol avec un système de nettoyage des sols selon l'une quelconque des revendications précédentes, dans lequel un ordre de nettoyage, pour le nettoyage de la surface de sol à l'emplacement de l'utilisateur, est déclenché sur l'appareil de nettoyage des sols par un utilisateur par l'intermédiaire de l'unité de commande utilisateur de l'appareil additionnel, l'ordre de nettoyage ainsi qu'une information de position concernant l'emplacement de l'utilisateur sont transmis conjointement avec ou en tant que partie de l'ordre de nettoyage à l'appareil de nettoyage des sols, et dans lequel l'appareil de nettoyage des sols se déplace vers l'emplacement de l'utilisateur et nettoie la surface de sol avec l'au moins un ensemble de nettoyage conformément à l'ordre de nettoyage
